# EUROPEAN PATENT APPLICATION

(11) **EP 1 914 749 A1**
(43) Date of publication of application: **23.04.2008**
(21) Application number: 07110463.2
(22) Date of filing: 18.06.2007
(51) Int. Cl.: G11B 20/00, G06F 21/00

(54) **Electronic apparatus and firmware protection method**

(30) Priority: 17.10.2006 JP 2006282806
(71) Applicant: KABUSHIKI KAISHA TOSHIBA, Tokyo 105-8001 (JP)
(72) Inventor: Tobita, Yoshikata, Tokyo 105-8001 (JP); Haruki, Kosuke, Tokyo 105-8001 (JP); Shiomi, Yoshikazu, Tokyo 105-8001 (JP)
(74) Representative: Henkel, Feiler & Hänzel

(57) **Abstract**

According to one embodiment, a firmware protection method applied to an electronic apparatus comprising a chip of a processor, wherein the processor stores external unique information and chip unique information that is assigned uniquely to the chip, the firmware protection method comprising: transferring a firmware to the electronic apparatus, the firmware subjected to an encryption and a tampering check data addition by using information that is identical with the external unique information; performing a tampering check and a decryption of the firmware by using the external unique information stored in the chip; performing an encryption of the firmware and an addition of a tampering check data to the firmware by using the chip unique information; and storing the firmware in a predetermined storage.

## Description

### CROSS-REFERENCE TO RELATED APPLICATIONS

This application is based upon and claims the benefit of priority from Japanese Patent Application No. 2006-282806, filed October 17, 2006, the entire contents of which are incorporated herein by reference.

### BACKGROUND

### 1. Field

One embodiment of the invention relates to an electronic apparatus such as a playback unit for playing back digital content and a firmware protection method of protecting firmware used with the electronic apparatus.

### 2. Description of the Related Art

In recent years, for example, an HD DVD (High Definition Digital Versatile Disk) playback unit (player) has made its debut as a playback unit (player) that can handle high-definition video based on HD (High Definition) standard with development of the digital compression coding technology of a moving image. This kind of playback unit plays back data protected by copyright protecting technology and the playback mechanism must be protected from a hacker, etc. Thus, measures against tampering with the firmware used for playback processing are required.

Various arts of protecting the firmware used with an electronic apparatus such as a playback unit are available. For example, JP-A-2005-353127 describes the following art: The number of region rewrite times, the number of region reset times, and the currently setup region code of a DVD player are managed using the address corresponding to the number of region rewrite times and the number of region reset times, whereby each address becomes hard to determine and it becomes difficult to tamper with the firmware.

However, the firmware used with an electronic apparatus such as a playback unit must be protected not only after shipment of the apparatus, but also at the installing time in the manufacturing process before shipment of the apparatus. It is hard to say that the related art covers sufficient measures against tampering in the manufacturing process.

### SUMMARY

One of objects of the present invention is to provide a firmware protection method and an electronic apparatus that protect a firmware in the manufacturing process.
According to an aspect of the present invention, the firmware protection method comprises: transferring a firmware to the electronic apparatus, the firmware subjected to an encryption and a tampering check data addition by using information that is identical with the external unique information; performing a tampering check and a decryption of the firmware by using the external unique information stored in the chip; performing an encryption of the firmware and an addition of a tampering check data to the firmware by using the chip unique information; and storing the firmware in a predetermined storage.
According to another aspect of the present invention, an electronic apparatus comprises: an apparatus unique information storage unit that stores apparatus unique information assigned uniquely to the electronic apparatus; and a firmware storage unit that stores a firmware executed by a processor, wherein the firmware stored in the firmware storage unit is subjected to an encryption and an tampering check data addition at least using the apparatus unique information.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

FIG. 1 is an exemplary block diagram to show an example of a CPU and storage means installed in a playback unit according to one embodiment of the invention;

FIG. 2 is an exemplary drawing to show a flow of the development process, the manufacturing process, and product shipment of the playback unit of the embodiment of the invention;

FIG. 3 is an exemplary block diagram to show a configuration example of the playback unit of the embodiment of the invention;

FIG. 4 is an exemplary drawing to show an example of the functional configuration of a protection program used in a development process;

FIG. 5 is an exemplary drawing to show an example of the functional configuration of a protection program used in a manufacturing process;

FIG. 6 is an exemplary drawing to show an example of the functional configuration of a protection program used after product shipment;

FIG. 7 is an exemplary drawing to show a first operation procedure example of the protection programs; and

FIG. 8 is an exemplary drawing to show a second operation procedure example of the protection programs.

### DETAILED DESCRIPTION

An embodiment of the invention will be discussed with reference to the accompanying drawings.

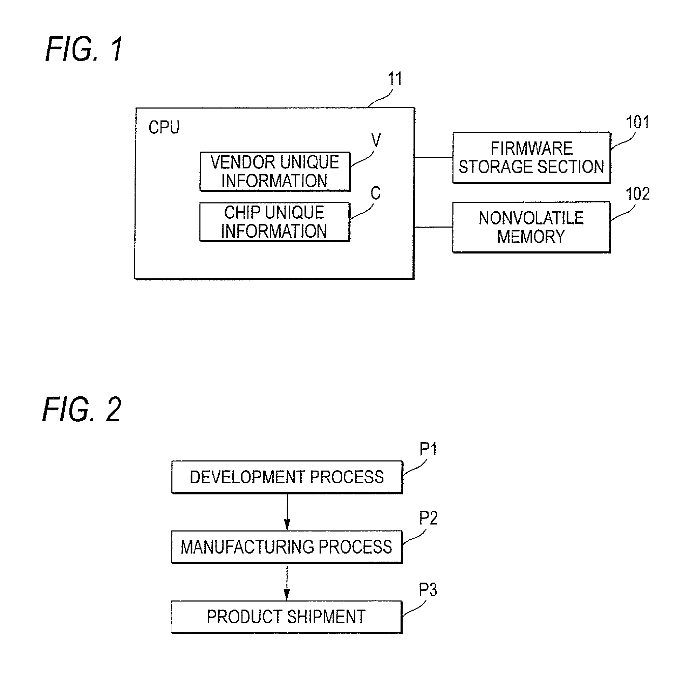

FIG. 1 is an exemplary block diagram to show an example of a CPU (Central Processing Unit) and storage means installed in a playback unit according to one embodiment of the invention.

A CPU (Central Processing Unit) 11 shown in FIG. 1 is a processor (main CPU) provided for controlling the operation of the playback unit of the embodiment. In a chip of the CPU 11, vendor unique information (vendor unique ID) V assigned uniquely to the manufacturer or the sales agent (vendor) and chip unique information (chip unique ID) C assigned uniquely to the chip are previously stored in a predetermined storage area. The vendor unique information and the chip unique information are used when firmware for controlling playback processing is installed in the manufacturing process of the playback unit or when the installed firmware is booted for playback processing after shipment of the playback unit. The vendor unique information and the chip unique information are not disclosed at all for other parties than the vendor of the CPU 11 (containing other vendors using the same CPU).

The playback unit is provided with a firmware storage section 101, volatile memory 102, etc., as well as the CPU 11. The firmware storage section 101 is a storage area for storing (installing) encrypted firmware after encryption and addition of tampering check data are conducted at least using the chip unique information C in the chip of the CPU 11 in the manufacturing process. The volatile memory 102 is memory for storing (loading) the firmware after tampering check and decryption are performed at least using the chip unique information C in the chip of the CPU 11 for the encrypted firmware read from the firmware storage section 101 in playback processing after shipment of the playback unit.

FIG. 2 is an exemplary drawing to show a flow of the development process, the manufacturing process, and product shipment of the playback unit of the embodiment.

In the development process, a development department develops firmware and hardware of the playback unit. When the developed firmware is transferred from the development department to a manufacturing department, the firmware is encrypted using the same information as the vendor unique information V in the chip of the CPU 11 by a computer, etc., and tampering check data is generated (for example, a hash value is generated by performing predetermined computation based on the same information as the vendor unique information V in the chip) and is added to the encrypted firmware. The encrypted firmware to which the tampering check data is added is delivered to the playback unit provided in the manufacturing department from the computer of the development department, for example, through a network or via a memory card, etc. The arbiter 11₁ exclusively (i.e., selectively) gives each of the plurality of control processor portions 9₁ and 9₂ a permission for establishment of communication with the IC card 7. That is, the arbiter 11₁ arbitrates communication requests from both the to the IC card 7, and gives only one of the control processor portions 9₁ and 9₂ a permission for communication with the IC card 7. Each of the control processor portions 9₁ and 9₂ transmits a part of broadcast data to the IC card 7, and receives a response from the IC card 7 to thereby use the descrambling of the contents data.

In the manufacturing process, the manufacturing department manufactures hardware of the playback unit and installs the firmware. When the encrypted firmware to which the tampering check data is added is entered in the playback unit, the CPU 11 starts installation processing of the firmware. In the installation processing, using the vendor unique information V in the chip of the CPU 11, the firmware entered in the playback unit is subjected to tampering check (for example, check to see if a hash value provided by performing predetermined computation based on the vendor unique information V in the chip matches the hash value added to the firmware) and decryption. If tampering is detected as the hash values do not match, etc., execution of the subsequent processing is prohibited. On the other hand, if the hash values match (no tampering exists), the firmware is again encrypted at least using the chip unique information C in the chip of the CPU 11 and tampering check data is generated (for example, a hash value is generated by performing predetermined computation using the chip unique information C in the chip) and is added to the encrypted firmware and this firmware is stored in the firmware storage section 101.

In product shipment P3, the playback unit with the encrypted firmware stored in the firmware storage section 101 is shipped. After shipment, when the user, etc., starts the playback unit, boot processing for the encrypted firmware in the firmware storage section 101 is started. In the boot processing, the encrypted firmware in the firmware storage section 101 is read and then is subjected to tampering check and decryption at least using the chip unique information C in the chip of the CPU 11. If tampering is detected as the hash values do not match, etc., execution of the subsequent processing is prohibited. On the other hand, if the hash values match (no tampering exists), the decrypted firmware is stored in the volatile memory 102.

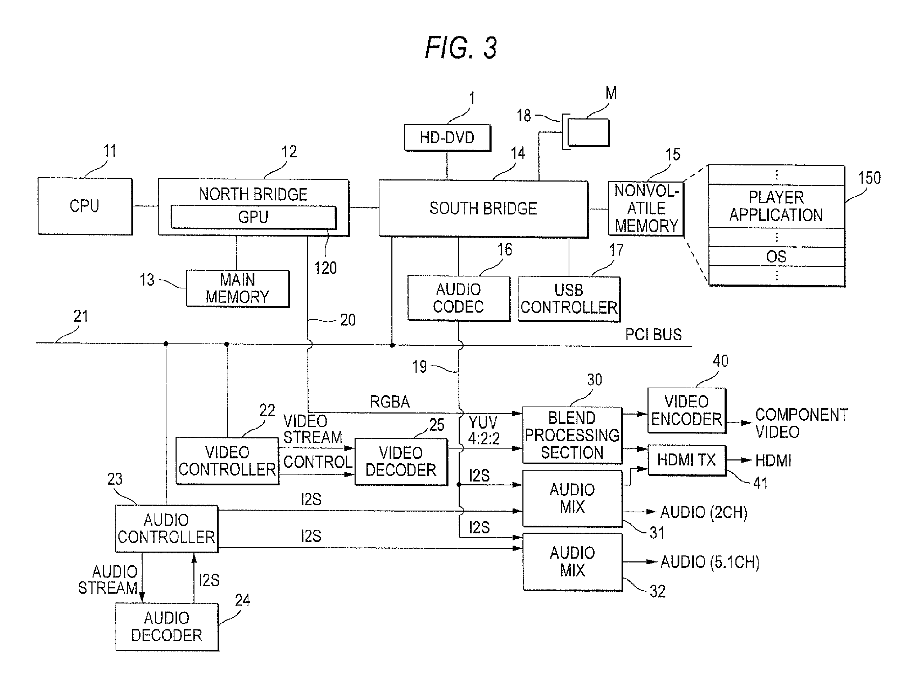

FIG. 3 is an exemplary block diagram to show a configuration example of the playback unit of the embodiment. The playback unit is an electronic apparatus for playing back digital content (for example, a movie, an animation, etc.,) formed of a data stream like audio visual data; for example, it is implemented as an HD DVD player for playing back digital content previously recorded on a storage medium such as an HD DVD (High Definition Digital Versatile Disk).

The playback unit is made up of the CPU 11, a north bridge 12, main memory 13, a south bridge 14, nonvolatile memory 15, an audio codec 16, a USB (Universal Serial Bus) controller 17, a card slot 18, an HD DVD drive 1, an audio bus 19, a graphics bus 20, a PCI (Peripheral Component Interconnect) bus 21, a video controller 22, an audio controller 23, an audio decoder 24, a video decoder 25, a blend processing section 30, audio mixers (Audio Mix) 31 and 32, a video encoder 40, an AV interface (HDMI-TX) 41 such as HDMI (High Definition Multimedia Interface), and the like.

The above-described firmware storage section 101 corresponds to the nonvolatile memory 15, for example. The above-described volatile memory 102 corresponds to the main memory 13, for example.

In the playback unit, a player application 150 and an operating system (OS) are installed in the nonvolatile memory 15. The player application 150 is software operating on the OS and performs control to play back AV content read from the HD DVD drive 1.

The CPU 11 is a processor provided for controlling the operation of the playback unit as described above. When the user, etc., starts the playback unit, the CPU 11 performs processing for booting the OS from the nonvolatile memory 15 and loading the OS and the related player application 150 into the main memory 13. The north bridge 12 is a bridge device for connecting a local bus of the CPU 11 and the south bridge 14. The north bridge 12 contains a memory controller for controlling access to the main memory 13. It further contains a GPU (Graphics Processing Unit) 120.

The GPU 120 is a graphics controller for generating graphics data (also called graphics image data) to form a graphics screen image from data written by the CPU 11 into video memory (VRAM) assigned to a storage area of a part of the main memory 13. The GPU 120 generates graphics data using a graphics computation function like bit block transfer. For example, if the CPU 11 writes image data (subvideo, subpicture, etc.,) into three planes on the VRAM, the GPU 120 uses bit block transfer to execute blend processing of superposing the image data corresponding to the three planes for each pixel, thereby generating graphics data to form a graphics screen image having the same resolution as main video (for example, 1920 x 1080 pixels).

The GPU 120 sends graphics data (RGBA data) that is made up of graphics data (digital RGB video signal) and alpha data through the graphics bus 20 to the blend processing section 30.

The south bridge 14 controls the devices on the PCI bus 21. It contains an IDE (Integrated Drive Electronics) controller for controlling the HD DVD drive 1. The south bridge 14 further has a function of accessing the nonvolatile memory 15, the USB controller 17, and the audio codec 16.

The HD DVD drive 1 is a drive unit for driving a storage medium such as an HD DVD medium storing audio video (AV) content corresponding to the HD DVD standard.

The audio codec 16 converts subaudio data decoded by software into a digital audio signal in I2S (Inter-IC Sound) format. The audio codec 16 is connected to the audio mixers (Audio Mix) 31 and 32 through the audio bus 19. The audio bus 19 is a transmission line connecting the audio codec 16 and the audio mixers (Audio Mix) 31 and 32. It allows the digital audio signal from the audio codec 16 to be transferred to the audio mixers (Audio Mix) 31 and 32 not via the PCI bus 21.

The card slot 18 is connected to the south bridge 14 for enabling data to be written onto and read from an attached memory card, etc. For example, the encrypted firmware to which the tampering check data is added in the development department is stored in a memory card and this memory card is placed in the card slot 18 for read in the manufacturing department, whereby the above-described installation processing can be executed.

The video controller 22 is connected to the PCI bus 21. The video controller 22 is an LSI performing an interface with the video decoder 25. A stream of main video data (Video Stream) separated from an HD DVD stream by software is sent to the video decoder 25 through the PCI bus 21 and the video controller 22. Decode control information (Control) output from the CPU 11 is also sent to the video decoder 25 through the PCI bus 21 and the video controller 22.

The video decoder 25 decodes the main video data and generates a digital YUV video signal to form a video screen image with a resolution of 1920 x 1080 pixels, for example. The digital YUV video signal is sent to the blend processing section 30.

The audio controller 23 is connected to the PCI bus 21. The audio controller 23 is an LSI performing an interface with the audio decoder 24. A stream of main audio data (Audio Stream) separated from an HD DVD stream by software is sent to the audio decoder 24 through the PCI bus 21 and the audio controller 23.

The audio decoder 24 decodes the main audio data and generates a digital audio signal in the I2S (Inter-IC Sound) format. The digital audio signal is sent to the audio mixers (Audio Mix) 31 and 32 through the audio controller 23.

The blend processing section 30 is connected to the GPU 120 and the video decoder 25 and executes blend processing to superpose the graphics data output from the GPU 120 and the main video data decoded by the video decoder 25. In the blend processing, blend processing (alpha blending processing) to superpose the digital RGB video signal to form the graphics data and the digital YUV video signal to form the main video data in pixel units is executed based on the alpha data output together with graphics data (RGB) from the GPU 120. In this case, the main video data is used as the lower screen image and the graphics data is used as the upper screen image superposed on the main video data.

The output image data provided by performing the blend processing is supplied to the video encoder 40 and the AV interface (HDMI-TX) 41 as the digital YUV video signal, for example. The video encoder 40 converts the output image data provided by performing the blend processing (digital YUV video signal) into a component video signal or an S-video signal and outputs the signal to an external display (monitor) like a TV receiver. The AV interface (HDMI-TX) 41 outputs a digital signal group containing the digital YUV video signal and the digital audio signal to an external HDMI apparatus.

The audio mixer (Audio Mix) 31 mixes the subaudio data decoded by the audio decoder 16 and the main audio data decoded by the audio decoder 24 and outputs the mixing result as a stereo audio signal. The audio mixer (Audio Mix) 32 mixes the subaudio data decoded by the audio decoder 16 and the main audio data decoded by the audio decoder 24 and outputs the mixing result as a 5.1-channel audio signal.

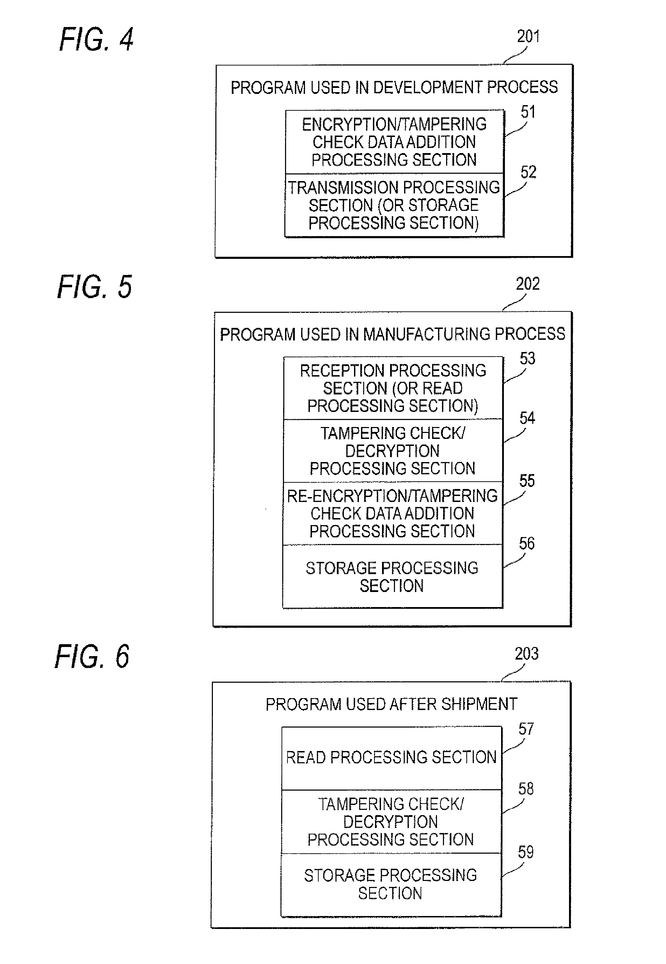

Next, protection programs (tools) for realizing protection of the firmware of the embodiment will be discussed with reference to FIGS. 4 to 6.

FIG. 4 is a drawing to show an example of the functional configuration of a protection program used in a development process P1 shown in FIG. 2.

A program 201 used in the development process P1 is a program for delivering the firmware developed in the development department to the manufacturing department with safety and is executed by a computer of the development department, and so on. The program 201 is made up of various functions of an encryption/tampering check data addition processing section 51, a transmission processing section (or a storage processing section) 52, and so on.

The encryption/tampering check data addition processing section 51 performs a function of encrypting the firmware developed in the development department and adding tampering check data to the firmware using the same information as the vendor unique information V in the chip of the CPU 11.

The transmission processing section (or the storage processing section) 52 performs a function of transmitting the encrypted firmware to which the tampering check data is added to a playback unit in the manufacturing department through the network or storing the firmware on a memory card, etc.

FIG. 5 is a drawing to show an example of the functional configuration of a protection program used in a manufacturing process P2 shown in FIG. 2.

A program 202 used in the manufacturing process P2 is a program (installing tool) for installing the firmware delivered from the development department with safety and is stored in a predetermined storage area in the playback unit (for example, in the CPU 11) and is executed by the CPU 11 in the playback unit. The program 202 is made up of various functions of a reception processing section (or a read processing section) 53, a tampering check/decryption processing section 54, a re-encryption/tampering check data addition processing section 55, a storage processing section 56, and so on.

The reception processing section (or the read processing section) 53 performs a function of receiving the encrypted firmware transmitted through the network from the development department in a playback unit or reading the encrypted firmware stored on a memory card, and so on, supplied from the development department into a playback unit.

The tampering check/decryption processing section 54 performs a function of checking the encrypted firmware input by the reception processing section (or the read processing section) 53 for tampering and decrypting the encrypted firmware using the vendor unique information V in the chip of the CPU 11.

The re-encryption/tampering check data addition processing section 55 performs a function of again encrypting the firmware subjected to the tampering check and decryption by the tampering check/decryption processing section 54 and adding tampering check data to the firmware at least using the chip unique information C in the chip of the CPU 11.

The storage processing section 56 is a function of storing (installing) the re-encrypted firmware to which the tampering check data is added by the re-encryption/tampering check data addition processing section 55 in the firmware storage section 101.

FIG. 6 is a drawing to show an example of the functional configuration of a protection program used after product shipment P3 shown in FIG. 2.

A program 203 used after the product shipment P3 is a program for booting the encrypted firmware installed in the manufacturing department with safety and is stored in a predetermined storage area in the playback unit and is executed by the CPU 11 in the playback unit like the program 202. The program 203 is made up of various functions of a read processing section 57, a tampering check/decryption processing section 58, a storage processing section 59, etc.

The read processing section 57 performs a function of reading the encrypted firmware installed in the firmware storage section 101 in the manufacturing department when the playback unit is started.

The tampering check/decryption processing section 58 performs a function of checking the encrypted firmware read by the read processing section 57 for tampering and decrypting the encrypted firmware at least using the chip unique information C in the chip of the CPU 11.

The storage processing section 59 performs a function of storing (loading) the firmware subjected to the tampering check and decryption by the tampering check/decryption processing section 58 in (into) the volatile memory 102.

The programs 202 and 203 may be integrated into one. The function portions common to both the programs 202 and 203 may be implemented as one module.

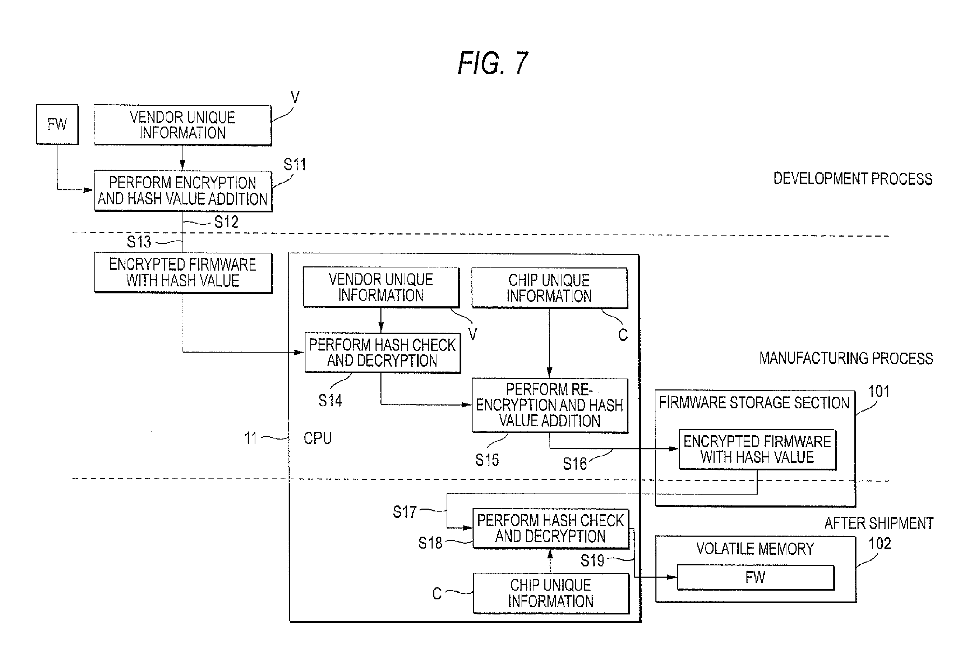

FIG. 7 is a drawing to show a first operation procedure example of the programs 201 to 203 shown in FIGS. 4 to 6.

In the development process, using the same information as the vendor unique information V in the chip of the CPU 11, the developed firmware is encrypted and a hash value is generated and is added to the encrypted firmware by a computer of the development department (step S11). The encrypted firmware to which the hash value is added is delivered to a playback unit provided in the manufacturing department from the computer of the development department through the network or via a memory card, and so on (step S12).

In the manufacturing process, when the encrypted firmware to which the hash value is added is entered in the playback unit (step S13), the CPU 11 starts installation processing of the firmware. In the installation processing, using the vendor unique information V in the chip of the CPU 11, the firmware entered in the playback unit is subjected to tampering check (hash value check) and decryption (step S14). If tampering is detected as the hash values do not match, and so on, execution of the subsequent processing is prohibited. On the other hand, if the hash values match (no tampering exists), using the chip unique information C in the chip of the CPU 11, the firmware is again encrypted and a hash value is generated and is added to the encrypted firmware (step S15) and this firmware is stored in the firmware storage section 101 (step S16).

After shipment, when the user, etc., starts the playback unit, boot processing for the encrypted firmware in the firmware storage section 101 is started. In the boot processing, the encrypted firmware in the firmware storage section 101 is read (step S17) and then is subjected to tampering check (hash value check) and decryption using the chip unique information C in the chip of the CPU 11 (step S18). If tampering is detected as the hash values do not match, etc., execution of the subsequent processing is prohibited. On the other hand, if the hash values match (no tampering exists), the decrypted firmware is stored in the volatile memory 102 (step S19).

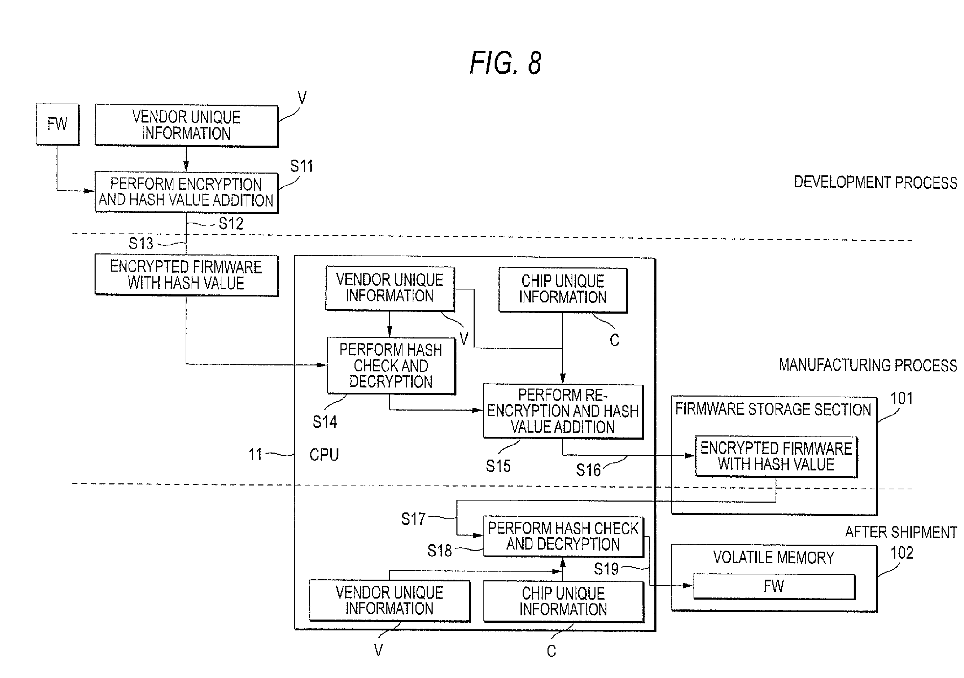

FIG. 8 is a drawing to show a second operation procedure example of the programs 201 to 203 shown in FIGS. 4 to 6. Common parts to those in FIG. 7 will not be discussed again and only differences from FIG. 7 will be discussed.

In the example previously described with reference to FIG. 7, when the firmware is again encrypted and the hash value is generated and added in the manufacturing process, the "chip unique information C" in the chip is used (step S15). In contrast, in the example in FIG. 8, not only the "chip unique information C" in the chip, but also the "vendor unique information V" in the chip is used (step S15').

In the example previously described with reference to FIG. 7, after shipment, when the firmware is checked for tampering (hash value check is executed for the firmware) and is decrypted, the "chip unique information C" in the chip is used (step S18). In contrast, in the example in FIG. 8, not only the "chip unique information C" in the chip, but also the "vendor unique information V" in the chip is used (step S18').

Thus, re-encryption, hash value generation, hash value check, and decryption are executed using both the "chip unique information C" and the "vendor unique information V," whereby the degree of difficulty in analyzing the firmware by a hacker, etc., can be still more enhanced.

In the description given above, the information previously stored in the chip of the CPU 11 is the "chip unique information" and the "vendor unique information" by way of example, but the invention is not limited to the mode. For example, the invention can also be applied to the case where "model unique information" assigned uniquely to the corresponding playback unit model rather than the "vendor unique information" is stored in the chip of the CPU 11. In this case, the "vendor unique information" in the function description and the operation description given above may be replaced with the "model unique information" for interpretation. That is, the combination of the "chip unique information" and the "vendor unique information" can be replaced with the combination of the "chip unique information" and the "model unique information." The "model unique information" may be stored in a predetermined storage area outside the chip (for example, a secret area in the playback unit). The chip unique information, the model unique information, etc., is key information and thus may be stored in a concealment state. The "chip unique information" may be given at random to each chip based on random numbers or may be given as serial numbers.

The invention can also be applied to the case where "apparatus unique information" assigned uniquely to the corresponding playback unit rather than the "chip unique information" is stored in the chip of the CPU 11. In this case, the "chip unique information" in the function description and the operation description given above may be replaced with the "apparatus unique information" for interpretation. That is, the combination of the "chip unique information" and the "vendor unique information" can be replaced with the combination of the "apparatus unique information" and the "vendor unique information." The "apparatus unique information" may be stored in a predetermined storage area outside the chip (for example, a secret area in the playback unit).

Likewise, the combination of the "chip unique information" and the "vendor unique information" can also be replaced with the combination of the "apparatus unique information" and the "model unique information" existing outside the chip, for example. In this case, the "chip unique information" in the function description and the operation description given above may be replaced with the "apparatus unique information" and the "vendor unique information" may be replaced with the "model unique information" for interpretation.

According to the above-described embodiment, the following advantages can be provided:
Since the firmware delivered from the development process to the manufacturing process is subjected to encryption and tampering check data addition using the same information as the vendor unique information in the chip of the CPU, the degree of difficulty in analyzing the firmware by a hacker, another vendor using the same CPU, etc., can be enhanced.
Since the firmware after delivered to the manufacturing process is subjected to both decryption involving tampering check and re-encryption by the program (firmware installing tool) stored in the CPU, etc., the degree of difficulty in analyzing the firmware by a hacker, another vendor using the same CPU, etc., can be enhanced.
After the product shipment, the firmware stored in the firmware storage section of the playback unit is subjected to encryption and tampering check data addition at least using the chip unique information in the chip of the CPU, so that the degree of difficulty in analyzing the firmware by a hacker, another vendor using the same CPU, etc., can be enhanced.

It is to be understood that the invention is not limited to the specific embodiment described above and that the invention can be embodied with the components modified without departing from the spirit and scope of the invention. The invention can be embodied in various forms according to appropriate combinations of the components disclosed in the embodiment described above. For example, some components may be deleted from all components shown in the embodiment. Further, the components in different embodiments may be used appropriately in combination.

## Claims

1. A firmware protection method applied to an electronic apparatus comprising a chip of a processor,
wherein the processor stores external unique information and chip unique information that is assigned uniquely to the chip, the firmware protection method comprising:
transferring a firmware to the electronic apparatus, the firmware subjected to an encryption and a tampering check data addition by using information that is identical with the external unique information;
performing a tampering check and a decryption of the firmware by using the external unique information stored in the chip;
performing an encryption of the firmware and an addition of a tampering check data to the firmware by using the chip unique information; and
storing the firmware in a predetermined storage.

2. The firmware protection method according to claim 1,
wherein the external unique information includes a vendor unique information assigned uniquely to a manufacturer or a sales agent.

3. The firmware protection method according to calim 1,
wherein the external unique information includes a model unique information assigned uniquely to a model of the electronic apparatus

4. The firmware protection method according to claim 1, further comprising:
reading the firmware from the storage when the electronic apparatus is activated;
performing an decryption of the read firmware and an addition of a tampering check data to the read firmware by using the chip unique information in the chip; and
storing the read firmware subjected to the tampering check and the decryption in a predetermined volatile memory.

5. The firmware protection method according to claim 2,
wherein the vendor unique information is further used in the step of performing an encryption of the firmware and an addition of a tampering check data to the firmware.

6. The firmware protection method according to claim 3,
wherein the model unique information is further used in the step of performing an encryption of the firmware and an addition of a tampering check data to the firmware.

7. An electronic apparatus comprising:
a chip including a processor that stores chip unique information assigned uniquely to the chip; and
a storage unit that stores a data including a firmware executable in the processor;
wherein the firmware is encrypted by using the chip unique information; and
wherein data for checking tempering is added to the firmware.

8. The electronic apparatus according to claim 7,
further comprising: a volatile memory that stores the firmware after the tampering check and the decryption are performed at least using the chip unique information.

9. The electronic apparatus according to claim 7,
wherein the chip stores a vendor unique information assigned uniquely to a manufacturer or a sales agent; and
wherein the firmware stored in the storage unit is subjected to an encryption and a tampering check data addition using the vendor unique information and the chip unique information.

10. The electronic apparatus according to claim 7,
wherein the chip stores a model unique information assigned uniquely to the model of the electronic apparatus; and
wherein the firmware stored in the storage unit is subjected to an encryption and a tampering check data addition using the model unique information and the chip unique information.

11. The electronic apparatus according to claim 7,
wherein the firmware stored in the storage unit includes a program for controlling playback processing of digital content in the electronic apparatus.

12. A firmware protection method applied to an electronic apparatus comprising a chip of a processor,
wherein the processor stores external unique information and apparatus unique information that is assigned uniquely to the apparatus, the firmware protection method comprising:
transferring a firmware to the electronic apparatus, the firmware subjected to an encryption and a tampering check data addition by using information that is identical with the external unique information;
performing a tampering check and a decryption of the firmware by using the external unique information stored in the chip;
performing an encryption of the firmware and an addition of a tampering check data to the firmware by using the chip unique information; and
storing the firmware in a predetermined storage.

13. The firmware protection method according to claim 12,
wherein the second unique information includes a vendor unique information assigned uniquely to a manufacturer or a sales agent.

14. The firmware protection method according to claim 12,
wherein the second unique information includes a model unique information assigned uniquely to a model of the electronic apparatus

15. The firmware protection method according to claim 12, further comprising:
reading the firmware from the storage when the electronic apparatus is activated;
performing an decryption of the read firmware and an addition of a tampering check data to the read firmware by using the apparatus unique information in the electronic apparatus; and
storing the read firmware subjected to the tampering check and the decryption in a predetermined volatile memory.

16. The firmware protection method according to claim 13,
wherein the vendor unique information is further used in the step of performing an encryption of the firmware and an addition of a tampering check data to the firmware.

17. The firmware protection method according to claim 14,
wherein the model unique information is further used in the step of performing an encryption of the firmware and an addition of a tampering check data to the firmware.

18. An electronic apparatus comprising:
an apparatus unique information storage unit that stores apparatus unique information assigned uniquely to the electronic apparatus; and
a firmware storage unit that stores a firmware executed by a processor,
wherein the firmware stored in the firmware storage unit is subjected to an encryption and an tampering check data addition at least using the apparatus unique information.

19. The electronic apparatus according to claim 18,
further comprising:
a volatile memory that stores a executable firmware after tampering check and decryption are performed at least using the apparatus unique information for the firmware stored in the firmware storage unit; and
a vendor unique information storage unit that stores vendor unique information assigned uniquely to a manufacturer or a sales agent,
wherein the firmware stored in the firmware storage unit is subjected to an encryption and a tampering check data addition using the vendor unique information and the apparatus unique information.

20. The electronic apparatus according to claim 18,
Further comprising a model unique information storage unit that stores a model unique information assigned uniquely to the model of the electronic apparatus,
wherein the firmware stored in the firmware storing unit is subjected to an encryption and a tampering check data addition using the model unique information and the apparatus unique information.

21. The electronic apparatus according to claim 18,
wherein the firmware stored in the firmware storage unit performs controlling for playback processing of digital content in the electronic apparatus.
